# EUROPEAN PATENT SPECIFICATION

(11) **EP 1 038 622 B1**
(45) Date of publication and mention of the grant of the patent: **01.10.2003**
(21) Application number: 00105400.6
(22) Date of filing: 22.03.2000
(51) Int. Cl.: B23D 45/14

(54) **Radial miter saw for sections**
Radialkreissäge für Profile
Scie circulaire radiale pour profils

(30) Priority: 25.03.1999 IT MO990056
(43) Date of publication of application: 27.09.2000
(73) Proprietor: TOMESANI Giuliano, I-41100 Modena (IT)
(72) Inventor: TOMESANI Giuliano, I-41100 Modena (IT)
(74) Representative: Luppi, Luigi

(56) References cited:
- DE-A- 19 632 229
- US-A- 4 537 105
- US-A- 5 287 779
- US-A- 5 421 228

## Description

The present invention relates to a radial miter saw for sections.

Conventional miter saws, termed radial because they can work in a radial direction, have long been used by operators in the field in order to cut sections of different kinds on-site.

These machines essentially comprise a head on which a circular saw, driven by a corresponding motor, is mounted; in turn, this circular saw is articulately supported on a frame acting as an actual base for the miter saw and as a worktable on which the sections to be cut are rested.

The heads of conventional miter saws are, as above-mentioned, provided with an articulation in order to be able to cut the sections according to deifferent angles in space and are mounted so as to slide back and forth with respect to the position of the operator on strong horizontal guides, known as feed rods, in order to be able to perform cuts of a given depth.

Further, in compliance with applicable accident-prevention standards, they must be provided with blade guards so as not to access the cutting region of the blade with one's hands even unintentionally.

In practice, the spatial movement of the heads provides for a combination of possible movements ranging from straight-line translatory motion on the feed rods back and forth with respect to the operator, to rotation with a bilateral diagonal tilt of the blade, to swinging about a vertical axis which passes substantial at the initial region of the feed rods, to an upward and downward movement of the heads with respect to the base.

However, the shape of the articulations and most of all the possible extension of the feed rods limits the operating capabilities in conventional miter saws. Essentially, the sections on which these conventional machines can work must have dimensions and cross-sections which are limited by the active stroke that can be achieved with the heads on the feed rods, which if they were excessively long would cause the cantilever of the head, and therefore its weight, to assume values which would unacceptably reduce the precision of the cuts due to the onset of flexing and swaying, by the rotation angle that the feed rods can assume, and by the useful gap between the blade and the surface for supporting the sections, which allows so-called "butt" cutting of the sections.

In summary, the maximum dimensions of the sections must be contained to medium to low values, and conventional miter saws therefore have limited operating capabilities if acceptable cutting precision is required.

Moreover, the feed rods have shown, in some cases, high friction, causing early signs of seizure of the elements which, by coupling, allow the sliding of the head thereon: the gradual, even if slow, deterioration of the elements also affects the cutting precision.

A saw mechanism with miter box and pivoting arm is disclosed in US-A-4 537 105.

The aim of the present invention is to solve the above-noted problems of the prior art, providing a radial miter saw for sections which allows to work on larger sections than allowed by conventional miter saws, allows to perform butt cutting, at the same time has a simple structure which can be easily accessed for ordinary and extraordinary maintenance and has substantially modest dimensions and weights, does not cause seizures and maintains its cutting precision unchanged over time, at the same time working in maximum safety for users in any condition.

This aim and other objects are achieved by a radial miter saw according to the invention, which has the features set forth in claim 1.

Further characteristics and advantages of the present invention will become apparent from the following detailed description of a preferred embodiment of a radial miter saw for sections, illustrated only by way of non-limitative example in the accompanying drawings, wherein:

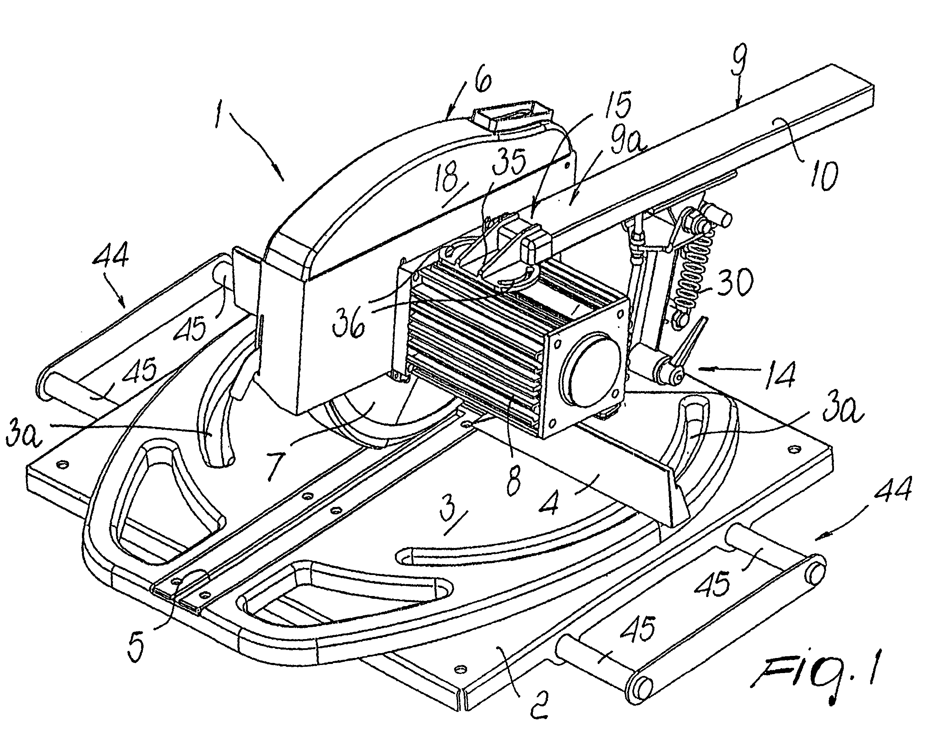

Figure 1 is a front perspective view of the radial miter saw according to the invention;

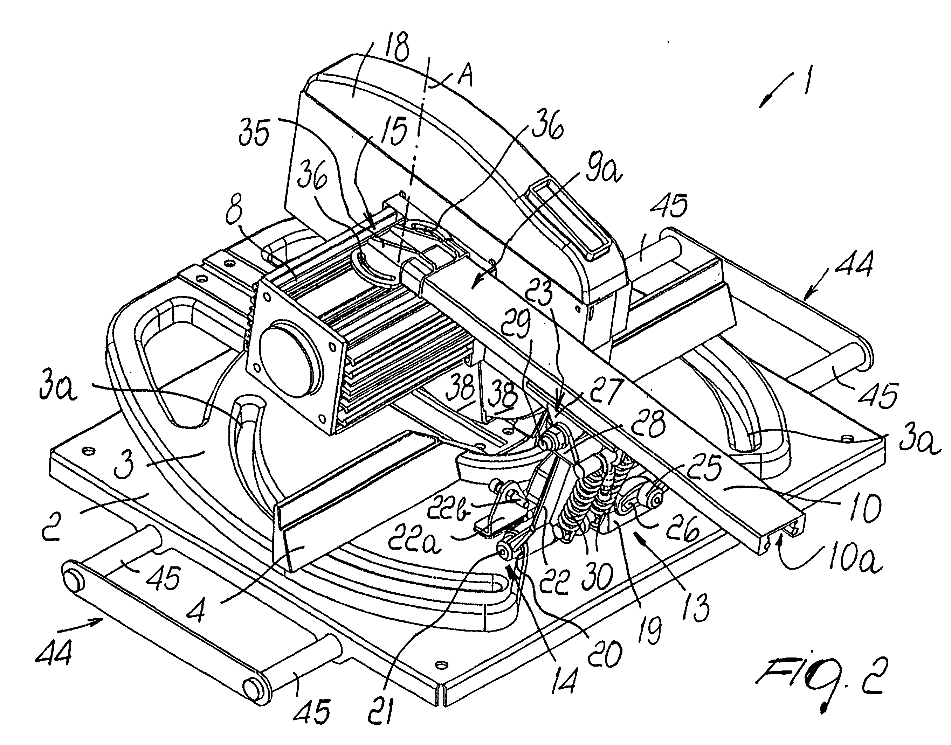

Figure 2 is a rear perspective view of the miter saw of Figure1;
Figures 3 and 4 are, respectively, a front perspective view and a rear perspective view, showing only the working head of the miter saw according to the invention without the base, and respectively showing the blade in a rotated position and the blade in a straight position;
Figure 5 is a schematic side view, in phantom lines, of the working head alone, with the blade in the rotated position;

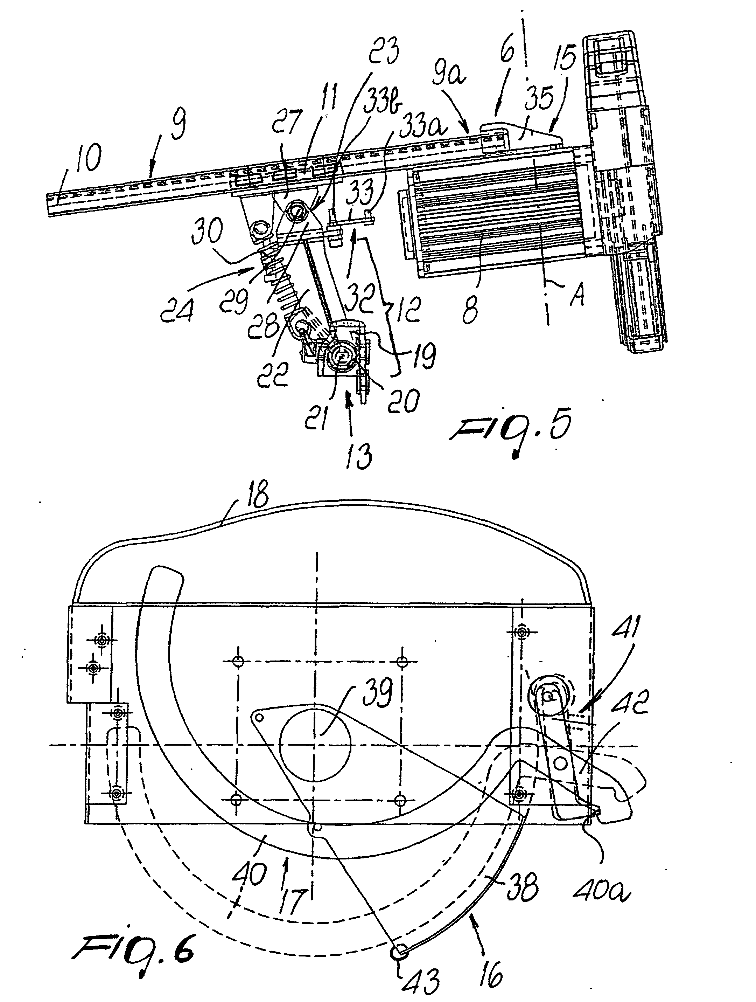

Figure 6 is another side view, in phantom lines, of the guards with which the blade is provided;

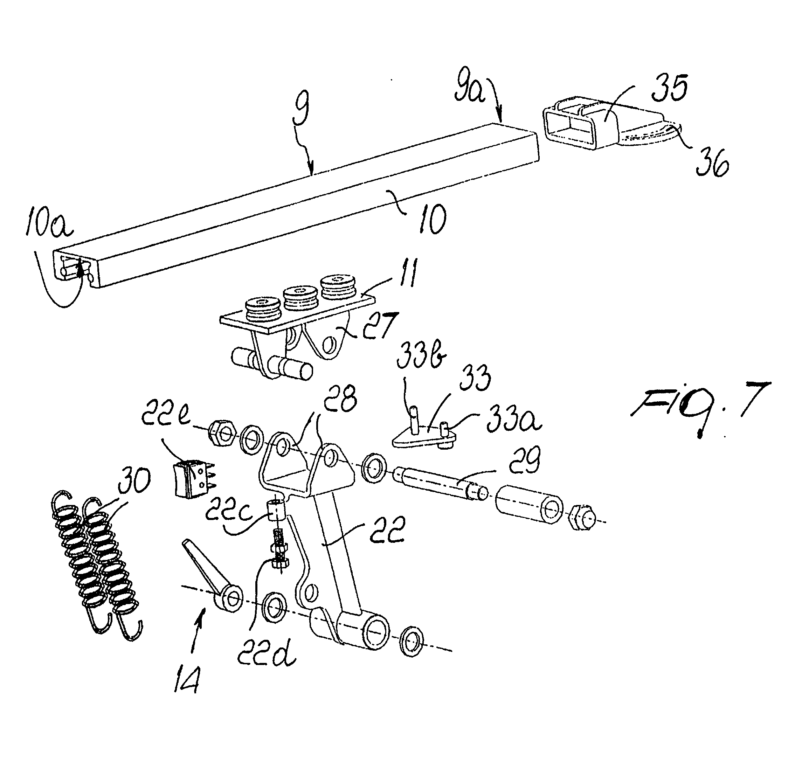

Figure 7 is an exploded perspective view of the components of the arm of the miter saw;

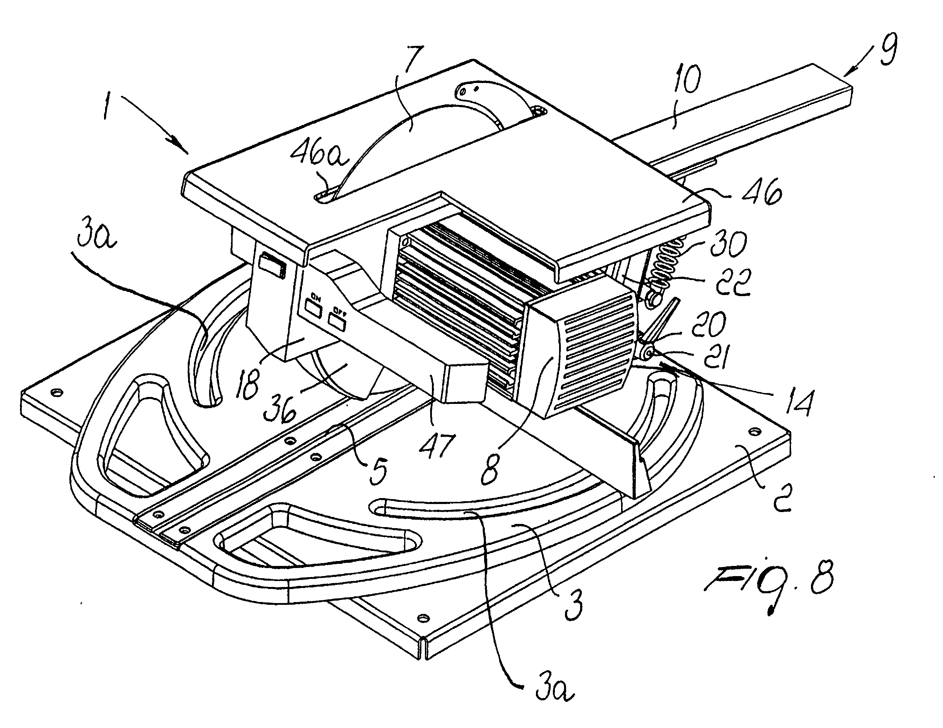

Figure 8 is a perspective view of the miter saw according to the invention in a second embodiment provided with a part supporting surface arranged above the arm;

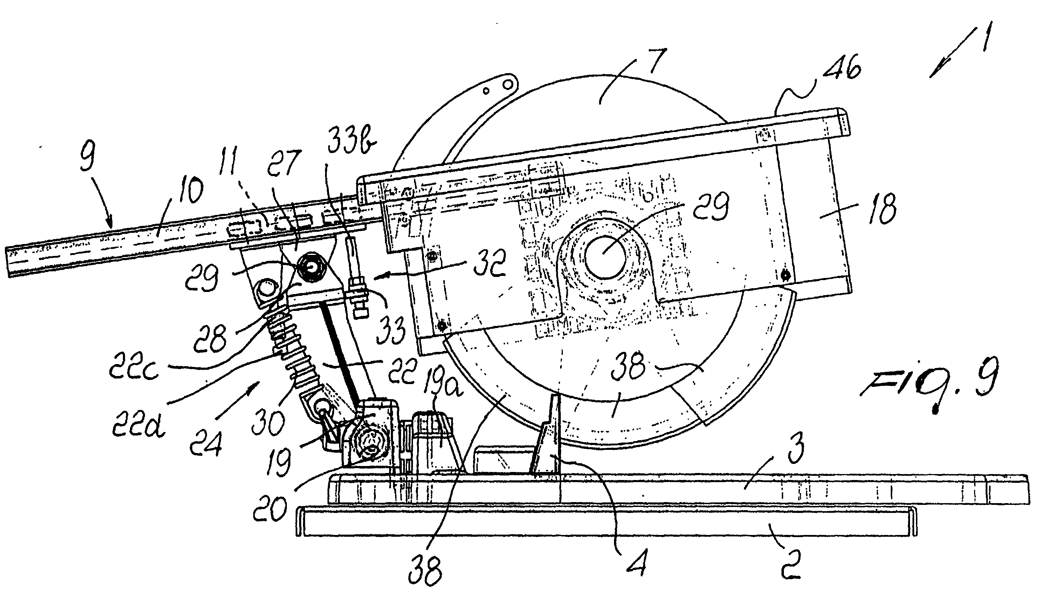

Figure 9 is a schematic side view, in phantom lines, of the miter saw according to the invention illustrated in Figure 8.

With reference to the above figures, 1 designates a radial miter saw for sections which comprises a base 2 for supporting parts on which an upper platform 3 is mounted; the platform can rotate in two directions and is provided with a reference abutment 4 and with a cutting slot 5.

The abutment 4 is fixed to the base 2 by means of two posts (not visible in the drawings) passing through corresponding arc-like slots 3a formed bilaterally in the platform 3.

The miter saw 1 is further composed of a working head 6, which is in turn composed of a circular blade 7 which is actuated by a corresponding motor assembly 8 and is supported so as to slide between a position which is proximate to the reference abutment 4 and a position which is distal thereto at the end 9a of a cantilevered supporting arm 9.

The arm is constituted by a straight segment 10 of a hollow section, which is slidingly engaged with a single degree of freedom, essentially so as to slide only axially, on a carriage 11 which is mounted at the upper end of a support 12 which protrudes from the platform 3; this support is provided with means 13 for two-dimensional position adjustment and with means 14 for locking the position once it has been reached.

Means for the rotary articulation of the head 6 with respect to the arm 9 about an axis A which is perpendicular to the arm 9 are interposed between the working head 6 and the end 9a of the arm 9.

The working head 6 is provided with means 16 and 17 for constantly protecting the integral portion of the blade in any configuration thereof, in addition to the fixed upper housing 18.

The section segment 10 that constitutes the arm 9 has a C-shaped cross-section in which the opening 10a faces downwards.

The support 12 is constituted by a prism-shaped block 19 which is coupled to the platform 3 or, more specifically, to a further block 19a which protrudes rigidly from the platform; the block 19 is affected by an engagement seat 20, which can be fixed angularly by way of the locking means, for the head of a pivot 21 which is transversely rigidly coupled to the base of a post 22 for supporting the carriage 11.

Articulation hinge means 23, adapted to allow the inclination of the arm 9 on a vertical plane, and elastic return means 24 are interposed between the carriage and the upper end of the post 22.

The post 22 is further provided with a stop element 22a provided with an abutment tooth 22b and whose position can be finely adjusted; the stop element is rigidly coupled to the rotating platform 3, and the post is further provided with an eyelet 22c which is formed in the rear region and in which it is insertable, in a finely adjustable way, an additional stop tooth 22d which affects a switch 22c which acts on the power supply of the motor assembly 8.

The angular locking means 14 are constituted by a through threaded key 25 which is slideable transversely in a curved slot 26 formed in the block 19 and is screwable transversely in the head of the pivot 21.

The hinge means 23 are constituted by two pairs of brackets 27 and 28 which protrude respectively from the lower face of the carriage 11 and from the facing upper end of the post 22 and mutually overlap; the brackets are mutually connected by means of an ordinary transverse articulation pin 29 which is inserted in aligned eyelets formed in said pairs of brackets 27 and 28.

The elastic return means 24 are constituted by two mutually parallel traction springs 30 whose respective ends are rigidly coupled to the block 19 and to further second brackets 31 which protrude downwards from the lower face of the carriage 11; elements 32 for stopping the rotation of the arm 9 on a vertical plane are provided between the carriage and the post 22 and are constituted by a flat pawl 33 in which one end is rotatably articulated at 34 to the upper end of the post 22 and the opposite end is provided with at least one pair of abutment teeth 33a and 33b having different heights, which alternatively act as lower abutments, at different levels, which can be alternated by means of the rotation of the pawl 33, for said arm 9.

The means 15 for the rotary articulation of the head 6 with respect to the arm 9 are constituted by a ledge-like bracket 35 which protrudes from the distal end 9a of the arm 9 that is directed towards the blade 7 and is affected by two circular converging slots 36 which are arranged bilaterally to the rotation axis A for the rightward and leftward guiding of two pins engaged therein (not shown in the drawings) which protrude from the body of the motor assembly 8.

The means 16 and 17 for the integral protection of the blade 7 are constituted by a series of circular sectors 38 which can be arranged in a fan-like configuration in contact on the parts and mutually interpenetrate telescopically and retractably in a gradual way, in proportion to the penetration of the blade 7 in the parts. The sectors 38 are rotationally pivoted at 39 coaxially to the blade 7 and are activatable in a protection configuration alternatively to a parallel semicircular monolithic element 40 which is normally retained in the raised inactive position by hook means 41 which can be disengaged manually or automatically by the sectors 38 when they reach a configuration which fully exposes the blade 7.

The hook means 41 are constituted by a detent 42 which can be inserted, in the configuration in which the semicircular element 40 does not intervene, in a retention recess 40a formed in the handle of the element.

At least the first one of the circular sectors 38 is provided with a feeler 43 for constant contact with the parts.

Finally, the base 2 is bilaterally provided with supporting means 44 for modular surfaces for extending the part supporting surface; these surfaces are constituted by respective pairs of rods 45 mounted horizontally so as to be extractable from the base 2 and can be retractably stored below it when not in use.

In a second embodiment of the radial miter saw 1, an additional surface 46 for resting the parts to be cut is provided above the working head 6 and is rigidly coupled thereto; the surface 46 is crossed by a slot 46a which lies at the plane of arrangement of the blade 7 and through which the upper portion of the blade 7 protrudes.

The operation of the invention is as follows: when it is necessary to cut a section, the section is usually arranged in abutment against the reference abutment 4.

If the cut to be performed is of the so-called "butt" type, the operator pulls the working head 6 towards him and raises the arm 9 with respect to the platform 3; then, by overcoming the return action of the springs 30, he turns the post 22 towards the platform until it abuts against the stop element 22b, which has been set beforehand.

The operator then starts the motor assembly 8 and, by lowering the blade 7 onto the part, performs the butt cut as required, biting into the part from its rear region, i.e. starting from the outer region towards the reference abutment 4.

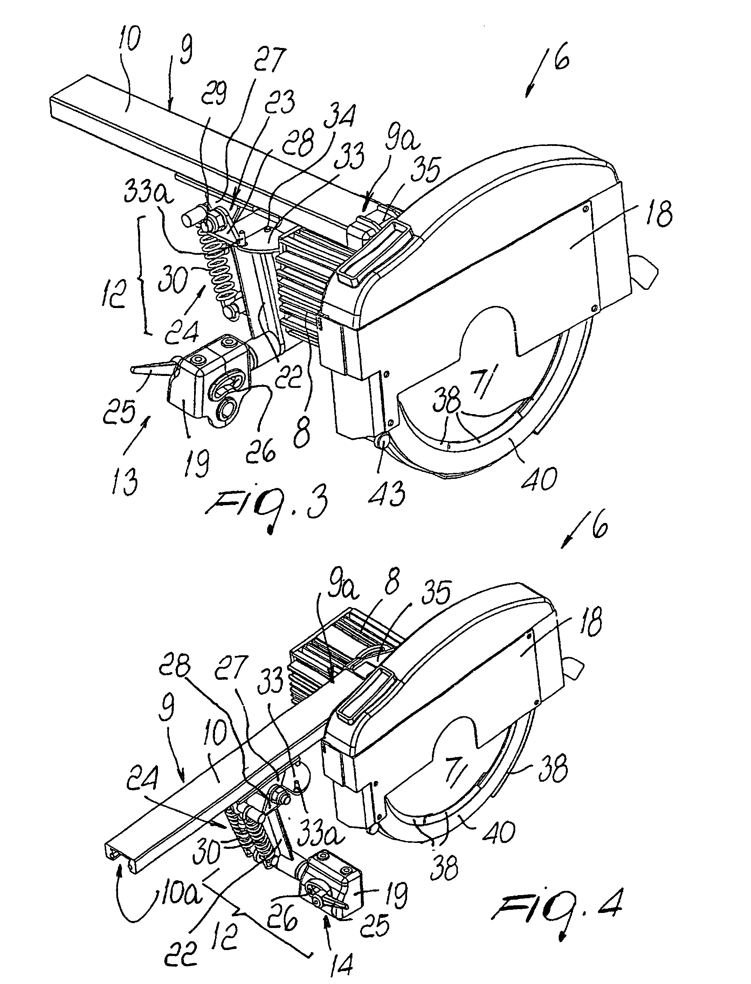

With the miter saw 1 it is also possible to perform other cuttings of sections in all spatial directions: by turning the working head 6 about the axis A (see also Figure 4) it is in fact possible to perform longitudinal cuttings of very long sections.

In order to prevent the blade, in this configuration, from damaging the platform 3 at the lower end of its stroke because it is no longer aligned with the working slot 5, in which instead it normally penetrates when it is parallel to the arm 9, the operator moves the pawl 33 so as to place the higher tooth 33b under the arm 9, so that when the operator performs the cut by pushing the blade towards the platform 3 the arm 9 abuts against the tooth 33b, whose height is adequately calculated so as to keep the blade 7 raised from the platform 3, even if by only a few millimeters.

Another operating possibility is further obtained by acting on the key 25; by loosening the key it is possible to move the working head 6, tilting it laterally on either side; this allows to perform oblique cuts.

The second embodiment of the radial miter saw 1 is provided with an upper surface 46 for supporting very long sections to be cut: this version is functionally equivalent to the preceding one but cheaper to provide and is proposed as an alternative to the more complete and expensive one in which the head 6 can rotate about the axis A.

In all cases, the particular embodiment of the arm 9, which is common to both embodiments, allows to work with maximum ease in sliding and precision: the carriage 11 in fact slides within the hollow section 10 without appreciable plays and with minimal friction. Accordingly, the working head 6 is therefore guided perfectly without swaying even when the arm 9 and the post 22 consecutively reach the maximum outreach proximate to the operator with respect to the abutment 4.

Moreover, the sectors 38, which are also common to both versions, protect the blade 7 in any position that it assumes with respect to the part to be cut; the telescopic arrangement by means of which they are articulated allows the gradual reaction of one sector into the next as the penetration of the blade 7 increases, without however ever exposing it and in practice preventing the operator or anyone else from arranging their hands proximate to it: the feeler 43 in fact keeps constant contact with the part being cut.

Even if these sectors 38 were forced to retract completely in case of very deep cuts, i.e. of very tall sections, the last one of the sectors would strike the detent 42, disengaging it automatically from the retention recess 40a and making the semicircular element 40 descend into an alternative protective position.

Once the above-described extreme condition has ceased, the operator, by lifting the blade from the part and thus allowing the sectors 38 to extend again in a fan-like arrangement, can disengage the element 40, locking it again in the raised position by means of the detent 42.

It is noted that the particular structure of the arm 9, combined with the post 22, allow the head 6 of the miter saw 1 to reach, in the extended configuration, outreaches which are absolutely unusual with respect to known miter saws.

When the arm 9 is fully lowered towards the platform 3, the stop tooth 22d is inserted in the eyelet 22c and affects the switch 22e, which in this configuration allows to switch on and off the motor assembly 8 by means of two on-off buttons located on a handle 47 which is associated with the housing 18.

Moreover, the possibility to provide for the rightward or leftward rotation of the head 6 by up to 90° on each side allows the miter saw to perform cuts even on very long sections; for these sections, the base 2 is supplemented by modular extension surfaces, resting them on the supporting means 44 which are extractable for this purpose.

In practice it has been observed that the above-described invention achieves the intended aim.

The invention this conceived is susceptible of numerous modifications and variations, all of which are within the scope of the inventive concept.

All the details may further be replaced with other technically equivalent ones.

In practice, the materials employed, as well as the shapes and the dimensions, may be any according to requirements without thereby abandoning the scope of the protection of the appended claims.

The disclosures in Italian Patent Application No. MO99A000056 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A radial miter saw for sections, comprising a base (2) for supporting parts on which an upper platform (3) is mounted, said platform (3) being able to turn in two directions and being provided with a reference abutment (4) and with a cutting slot (5), and a working head (6) which is composed of a circular blade (7) actuated by a corresponding motor assembly (8) and supported so as to slide between a position which is proximate to the abutment (4) and a position which is distal with respect to it at the end (9a) of a cantilevered, straight supporting arm (9) which is slidingly engaged, with a single degree of freedom, on a carriage (11) mounted at the upper end of a support (12) protruding from said rotating platform (3), said support (12) comprising position adjustment means (13), locking position means (14) and a post (22) for supporting said carriage (11), said post (22) being pivoted (21) at its base so as to be turnable towards the platform (3) by overcoming a return action of elastic return means (24), **characterized in that** it further comprises articulation hinge means (23), interposed between the upper end of said post (22) and said carriage (11), which allow inclination of said arm (9) on a vertical plane, with stop elements (32) for the downward stopping of the rotation of said arm (9) interposed, said hinge means (23) being constituted by two pairs of brackets (27, 28) which protrude respectively from the lower face of said carriage (11) and from the upper facing end of said post (22), mutually overlap and are mutually connected by way of a mutual transverse articulation pivot (29) which is inserted in aligned eyelets formed in said pairs of brackets (27, 28), said arm (9) being constituted by a hollow section segment (10), and said position adjustment means (13) being provided so as to provide a two-dimensional position adjustment.

2. The radial miter saw according to claim 1, **characterized in that** means (15) for the rotary articulation of the head (6) with respect to said arm (9) about an axis (A) perpendicular to said arm (9) are interposed between said working head (6) and said end (9a) of the arm (9).

3. The radial miter saw according to claim 1, **characterized in that** said working head (6) is provided with means (16, 17) for the constant protection of the integral portion of the blade (7) in every configuration thereof.

4. The radial miter saw according to claim 1, **characterized in that** said section segment (10) has a C-shaped cross-section in which the opening faces downwards.

5. The radial miter saw according to claim 1, **characterized in that** said support (12) is constituted by a prism-shaped block (19) which is rigidly coupled to said platform (3) and is provided with an engagement seat (20), which can be angularly fixed with said locking means (14), for the head of a pivot (21) which is transversely rigidly coupled to the base of a post (22) for supporting said carriage (11).

6. The radial miter saw according to claim 5, **characterized in that** said angular locking means (14) are constituted by a threaded through key (25) which is slideable transversely in a curved slot (26) which is formed in said block (19) and is screwable transversely in said head of the pivot (21).

7. The radial miter saw according to any of the preceding claims, **characterized in that** said elastic return means (24) are constituted by two traction springs (30) which are mutually parallel and whose ends are rigidly coupled respectively to said block (19) and to additional second brackets (31) which protrude downwards from the lower face of said carriage (11).

8. The radial miter saw according to claim 6, **characterized in that** said stop elements (32) for stopping rotation of the arm (9) on a vertical plane are constituted by a flat pawl (33) in which one end is articulated (34) to the corresponding upper end of said post (22) and the opposite end is provided with at least one pair of abutment teeth (33a, 33b) having different heights which can be alternatively arranged below said arm (9) after turning said pawl (33).

9. The radial miter saw according to the preceding claims, **characterized in that** a finely adjustable element (22d) for stopping the rotation of said post (22) towards said platform (3) is interposed between said post (22) and said platform (3).

10. The radial miter saw according to claim 2, **characterized in that** said means (15) for the rotary articulation of the head (6) with respect to the arm (9) are constituted by a ledge-like bracket (35) which protrudes from the distal end (9a) of said arm (9) that is directed towards the blade (7) and is provided with two converging circular slots (36) which are arranged bilaterally with respect to the rotation axis (A) for the rightward and leftward guiding of two pins which engage therein and protrude from the body of said motor assembly 8) for actuating the blade (7).

11. The radial miter saw according to claim 3, **characterized in that** said means (16, 17) for the integral protection of the blade (7) are constituted by a series of circular sectors which can be arranged in a fan-like configuration in contact on the parts and telescopically and retractably interpenetrate gradually and proportionally to the penetration of the blade (7) in the parts, said sectors (38) being rotationally pivoted coaxially to said blade (7) and being activatable in the protection configuration alternatively with respect to a parallel semicircular monolithic element (40) which is normally retained in the raised inactive position by hook means (41) which can be disengaged manually or automatically by said sectors (38) if they reach a configuration in which the blade (7) is fully exposed.

12. The radial miter saw according to claim 11, **characterized in that** at least the first one of said circular sectors (38) is provided with a feeler (43) for constant contact with the parts.

13. The radial miter saw according to the preceding claims, **characterized in that** said base (2) is bilaterally provided with supporting means (44) for modular surfaces for extending the part supporting surface.

14. The radial miter saw according to claim 13, **characterized in that** said supporting means (44) are constituted by respective pairs of rods (45) which are fitted horizontally and so that they can be extracted from said base (2) and can be retractably stored below it in the inactive configuration.

15. The radial miter saw according to the preceding claims, **characterized in that** said head (6) is provided, in an upward region, with a second part supporting surface (46) which is crossed by a slot (46a) formed on the vertical plane of arrangement of said blade (7) for the passage of an upper portion of said blade (7).

16. The radial miter saw according to the preceding claims, **characterized in that** in the so-called butt cutting of sections, said head (6) moves the blade (7) so as to bite into the sections from the rear, i.e. by translatory motion on said arm (9) from the outside towards said reference abutment (4).

17. The miter saw according to claim 1, **characterized in that** said reference abutment (4) is supported on the base (3) by corresponding vertical posts which pass at corresponding circular-arc slots (3a) which are formed bilaterally in said platform (3).

## Patentansprüche

1. Gehrungskreissäge für Profile, bestehend aus einer Basis (2) zum Halten von Teilen, auf denen eine obere Platte (3) angeordnet ist, wobei die Platte (3) sich in zwei Richtungen drehen kann und mit einer Anschlagkante (4) und einem Schneidschlitz (5) ausgestattet ist und mit einem Arbeitskopf (6), der aus einem kreisförmigen Sägeblatt (7) besteht, das von einer entsprechenden Motoreinheit (8) betätigt wird und so gehalten ist, dass es zwischen einer Position, die proximal zu der Anschlagkante (4) liegt und einer Position die distal zu dieser an dem Ende (9a) eines geraden Kragarms (9) liegt, der mit einem einzigen Freiheitsgrad gleitend auf einem Träger (11) gelagert ist, der an dem oberen Ende einer Halterung (12) angeordnet ist, die auf der drehenden Platte aufragt, gleitet, wobei die Halterung (12) Mittel (13) zum Einstellen einer Position, Feststellmittel (14) und einen Ständer (22) zum Halten des Trägers (11) aufweist, wobei der Ständer (22) an seiner Basis drehbar (21) ist, so dass er durch Überwinden eines Widerstands elastischer Rückstellmittel (24) auf die Platte gedreht werden kann, **dadurch gekennzeichnet, dass** sie weiter ein Scharniermittel (23) aufweist, die zwischen dem oberen Ende des Ständers (22) und dem Träger (11) angeordnet sind, die eine Neigung des Arms (9) in einer vertikalen Ebene erlauben, wobei Anschlagelemente (32) zum Anhalten der Abwärtsdrehung des Arms (9) dazwischen angeordnet sind, wobei die Scharniermittel (23) aus zwei Paar Winkelstücken (27, 28) bestehen, die sich jeweils von der Unterseite des Trägers (11) und von dem oben liegenden Ende des Ständers (22) aus erstrecken, sich gegenseitig überlappen und gegenseitig durch einen gemeinsamen transversen Schwenkbolzen (29) verbunden sind, der in zueinander ausgerichteten Bohrungen in dem Winkelstückpaar eingesteckt ist, wobei der Arm (9) aus einem hohlen Profilabschnitt (10) besteht und die Einstellmittel (13) so ausgestattet sind, dass sie eine zweidimensionale Positionierung erlauben.

2. Gehrungskreissäge nach Anspruch 1, **dadurch gekennzeichnet, dass** Mittel (15) für die Drehbewegung des Kopfs (6) gegenüber dem Arm (9) um eine Achse, die senkrecht zu dem Arm (9) liegt, zwischen dem Arbeitskopf (6) und dem Ende (9a) des Arms (9) angeordnet sind.

3. Gehrungskreissäge nach Anspruch 1, **dadurch gekennzeichnet, dass** der Arbeitskopf (6) mit Mitteln (16, 17) zum ständigen Schutz des ganzen Abschnitts des Sägeblatts (7) in jeder seiner Konfigurationen ausgestattet ist.

4. Gehrungskreissäge nach Anspruch 1, **dadurch gekennzeichnet, dass** der Profilabschnitt (10) einen C-förmigen Querschnitt aufweist, wobei die Öffnung nach unten zeigt.

5. Gehrungskreissäge nach Anspruch 1, **dadurch gekennzeichnet, dass** die Halterung (12) aus einem prismenförmigen Block (19) besteht, der starr mit der Platte (3) verbunden ist und ein Eingriffslager (20) für den Kopf eines Bolzens (21), der transvers starr mit der Basis eines Ständers (22) zum Halten des Trägers (11) verbunden ist, besitzt, das winklig mit den Feststellmitteln (14) befestigt werden kann.

6. Gehrungskreissäge nach Anspruch 5, **dadurch gekennzeichnet, dass** das winklige Feststellmittel (14) aus einem durchgehenden Gewindebolzen (25) besteht, der transvers in einer gekrümmten Kulisse (26) verschiebbar ist, die in dem Block (19) gebildet ist und der transvers in den Kopf des Bolzens (21) schraubbar ist.

7. Gehrungskreissäge nach Anspruch nach einem der vorhergehenden Ansprüche, **dadurch gekennzeichnet, dass** die elastischen Rückstellmittel (24) aus zwei Zugfedern (30) bestehen, die parallel zueinander liegen und deren Enden jeweils mit dem Block (19) und mit zusätzlichen zweiten Winkelstücken verbunden sind, die von der Unterseite des Trägers (11) nach unten ragen.

8. Gehrungskreissäge nach Anspruch 6, **dadurch gekennzeichnet, dass** die Anschlagelemente (32) zum Anhalten der Drehung des Arms (9) in der vertikalen Ebene aus einer flachen Klinke (33) bestehen, die mit einem Ende an dem entsprechenden oberen Ende des Ständers (22) angelenkt ist und mit ihrem entgegengesetzten Ende mit wenigstens einem Paar Anschlagzähnen (33a, 33b) versehen ist, die eine unterschiedliche Höhe aufweisen, die alternativ durch Drehen der Klinke (33) unter dem Arm (9) angeordnet werden können.

9. Gehrungskreissäge nach einem der vorhergehenden Ansprüche, **dadurch gekennzeichnet, dass** ein fein einstellbares Element (22d) für das Anhalten der Drehung des Ständers (22) auf die Platte (3) zwischen dem Ständer (22) und der Platte (3) angeordnet ist.

10. Gehrungskreissäge nach Anspruch 2, **dadurch gekennzeichnet, dass** Mittel (15) für die Drehbewegung des Kopfs (6) gegenüber dem Arm (9) durch ein leistenähnliches Winkelstück (35) gebildet werden, das von dem distalen Ende (9a) des Arms (9) vorspringt, das auf das Sägeblatt gerichtet ist, und das mit zwei konvergierenden Schlitzen (36) versehen ist, die beidseitig gegenüber der Drehachse (A) zum rechten und linken Führen von zwei Zapfen angeordnet sind, die in diese eingreifen und von dem Gehäuse der Motoreinheit (8) vorspringen, die das Sägeblatt betätigt.

11. Gehrungskreissäge nach Anspruch 3, dadurch gekenzeichnet, dass die Mittel (16, 17) für das vollständige Schützen des Sägeblatts (7) aus einer Reihe von Kreisabschnitten bestehen, die bei Kontakt mit den Teilen in fächerartiger Konfiguration angeordnet werden können und sich teleskopisch zurückziehbar schrittweise und proportional zu dem Eindringen des Sägeblatts (7) in die Teile ineinander schieben, wobei die Abschnitte (38) koaxial zu dem Sägeblatt (7) drehbar angelenkt sind und in der Schutzkonfiguration alternativ gegenüber einem parallelen halbkreisförmigen monolithischen Element (40) aktivierbar sind, das normalerweise durch Haken (41) in einer inaktiven angehobenen Position gehalten wird, die manuell oder automatisch durch die Abschnitte (38) außer Eingriff gebracht werden, wenn sie eine Konfiguration erreichen, in der das Sägeblatt (7) völlig freigelegt ist.

12. Gehrungskreissäge nach Anspruch 11, **dadurch gekennzeichnet, dass** wenigstens der erste der Kreisabschnitte (38) mit einem Taster (43) für konstanten Kontakt mit den Teilen versehen ist.

13. Gehrungskreissäge nach einem der vorhergehenden Ansprüche, **dadurch gekennzeichnet, dass** die Basis (2) beidseitig mit Haltemitteln (44) für modulare Flächen versehen ist, um die Teile tragende Fläche zu vergrößern.

14. Gehrungskreissäge nach Anspruch 13, **dadurch gekennzeichnet, dass** die Haltemittel (44) jeweils aus einem Paar Stangen (45) bestehen, die horizontal befestigt sind, so dass sie aus der Basis (2) gezogen werden können und in der inaktiven Konfiguration zurückziehbar unter dieser gelagert werden können.

15. Gehrungskreissäge nach einem der vorhergehenden Ansprüche, **dadurch gekennzeichnet, dass** der Kopf (6) an einem oberen Bereich mit einer zweiten, Teile tragenden Fläche (46) versehen ist, die von einem Schlitz (46a) gekreut wird, der in der vertikalen Ebene der Sägeblattanordnung (7) gebildet ist, um einen oberen Bereich des Sägeblatts (7) durchzulassen.

16. Gehrungskreissäge nach einem der vorhergehenden Ansprüche, **dadurch gekennzeichnet, dass** beim so genannten Stirnsägen der Kopf (6) das Sägeblatt (7) bewegt, so dass es von hinten in die Abschnitte schneidet, d.h. durch eine translatorische Bewegung des Arms (9) von außen auf die Anschlagkante (4) zu.

17. Gehrungskreissäge nach Anspruch 1, **dadurch gekennzeichnet, dass** die Anschlagkante (4) durch korrespondierende vertikale, Ständer auf der Basis (2) gehalten wird, die durch korrespondierende kreisabschnittförmige Schlitze (3a), die beidseits in der Platte (3) gebildet sind, ragen.

## Revendications

1. Scie à onglet radiale pour profilés, comprenant une base (2) pour supporter des pièces, sur laquelle une plate-forme supérieure (3) est montée, ladite plate-forme (3) étant susceptible de tourner dans deux directions et étant munie d'une butée de référence (4) et d'une fente de coupe (5), et une tête de travail (6) qui est constituée par une lame circulaire (7) actionnée par un ensemble de moteur correspondant (8) et supportée de façon à coulisser entre une position qui est proche de la butée (4) et une position qui est distale par rapport à celle-ci à l'extrémité (9a) d'un bras de support droit en porte-à-faux (9) qui est engagé à coulissement, avec un seul degré de liberté, sur un chariot (11) monté à l'extrémité supérieure d'un support (12) faisant saillie à partir de ladite plate-forme rotative (3), ledit support (12) comprenant des moyens de réglage de position (13), des moyens de verrouillage de position (14) et un montant (22) pour supporter ledit chariot (11), ledit montant (22) pivotant (21) sur sa base de façon à pouvoir être tourné vers la plate-forme (3) en surmontant une action de rappel de moyens de rappel élastiques (24) ; **caractérisée en ce qu'**elle comprend de plus des moyens formant charnière d'articulation (23), interposés entre l'extrémité supérieure dudit montant (22) et ledit chariot (11), ce qui permet l'inclinaison dudit bras (9) sur un plan vertical, avec des éléments d'arrêt (32) pour l'arrêt vers le bas de la rotation dudit bras (9) interposés, lesdits moyens formant charnière (23) étant constitués par deux paires d'étriers (27, 28) qui font saillie, respectivement, à partir de la face inférieure dudit chariot (11) et à partir de l'extrémité tournée vers le haut dudit montant (22), qui se chevauchent mutuellement et qui sont mutuellement reliées au moyen d'un pivot d'articulation transversal mutuel (29) qui est inséré dans des oeillets alignés formés dans lesdites paires d'étriers (27, 28), ledit bras (9) étant constitué par un segment de profilé creux (10), et lesdits moyens de réglage de position (13) étant présents de façon à permettre un réglage de position en deux dimensions.

2. Scie à onglet radiale selon la revendication 1, **caractérisée en ce que** des moyens (15) pour l'articulation rotative de la tête (6) par rapport audit bras (9) autour d'un axe (A) perpendiculaire audit bras (9) sont interposés entre ladite tête de travail (6) et ladite extrémité (9a) du bras (9).

3. Scie à onglet radiale selon la revendication 1, **caractérisée en ce que** ladite tête de travail (6) est munie de moyens (16, 17) pour la protection constante de la partie intégrée de la lame (7) dans chaque configuration de celle-ci.

4. Scie à onglet radiale selon la revendication 1, **caractérisée en ce que** ledit segment de coupe (10) a une section transversale en forme de C dans laquelle l'ouverture fait face vers le bas.

5. Scie à onglet radiale selon la revendication 1, **caractérisée en ce que** ledit support (12) est constitué par un bloc en forme de prisme (19) qui est rigidement couplé à ladite plate-forme (3) et qui est muni d'un siège d'engagement (20), qui peut être fixé de façon angulaire auxdits moyens de verrouillage (14), pour la tête d'un pivot (21) qui est couplée rigidement transversalement à la base d'un montant (22) pour supporter ledit chariot (11).

6. Scie à onglet radiale selon la revendication 5, **caractérisée en ce que** lesdits moyens de verrouillage angulaire (14) sont constitués par une clavette transversale filetée (25) qui peut coulisser transversalement dans une fente incurvée (26) qui est formée dans ledit bloc (19) et qui peut être vissée transversalement dans ladite tête du pivot (21).

7. Scie à onglet radiale selon l'une quelconque des revendications précédentes, **caractérisée en ce que** lesdits de moyens de rappel élastiques (24) sont constitués par deux ressorts de traction (30) qui sont mutuellement parallèles et dont les extrémités sont rigidement couplées, respectivement, audit bloc (19) et à des deuxièmes étriers additionnels (31) qui font saillie vers le bas à partir de la face inférieure dudit chariot (11).

8. Scie à onglet radiale selon la revendication 6, **caractérisée en ce que** lesdits éléments d'arrêt (32) pour arrêter la rotation du bras (9) sur un plan vertical sont constitués par un cliquet plat (33) dans lequel une extrémité est articulée (34) avec l'extrémité supérieure correspondante dudit montant (22) et l'extrémité opposée est munie d'au moins une paire de dents de butée (33a, 33b) ayant des hauteurs différentes, qui peuvent être disposées de façon alternée en dessous dudit bras (9) après avoir fait tourner ledit cliquet (33).

9. Scie à onglet radiale selon les revendications précédentes, **caractérisée en ce qu'**un élément pouvant être réglé de façon fine (22d) pour arrêter la rotation dudit montant (22) vers ladite plate-forme (3) est interposé entre ledit montant (22) et ladite plate-forme (3).

10. Scie à onglet radiale selon la revendication 2, **caractérisée en ce que** lesdits moyens (15) pour l'articulation rotative de la tête (6) par rapport au bras (9) sont constitués par un étrier en forme de moulure (35) qui fait saillie à partir de l'extrémité distale (9a) dudit bras (9) qui est dirigée vers la lame (7) et qui est muni de deux fentes circulaires convergentes (36) qui sont disposées de façon bilatérale par rapport à l'axe de rotation (A) pour le guidage vers la droite et vers la gauche de deux broches qui s'engagent à l'intérieur de celles-ci et qui font saillie à partir du corps dudit ensemble de moteur (8) pour actionner la lame (7).

11. Scie à onglet radiale selon la revendication 3, **caractérisée en ce que** lesdits moyens (16, 17) pour la protection intégrée de la lame (7) sont constitués par une série de secteurs circulaires qui peuvent être agencés selon une configuration en forme de ventilateur en contact sur les pièces et qui s'interpénètrent de façon télescopique et rétractable graduellement et proportionnellement à la pénétration de la lame (7) dans les pièces, lesdits secteurs (38) pivotant en rotation coaxialement à ladite lame (7) et pouvant être actionnés dans la configuration de protection en alternance par rapport à un élément monolithe semi-circulaire parallèle (40) qui est normalement maintenu dans la position inactive relevée par des moyens formant crochet (41) qui peuvent être dégagés manuellement ou automatiquement par lesdits secteurs (38) s'ils atteignent une configuration dans laquelle la lame (7) est totalement exposée.

12. Scie à onglet radiale selon la revendication 11, **caractérisée en ce qu'**au moins le premier desdits secteurs circulaires (38) est muni d'un palpeur (43) pour un contact constant avec les pièces.

13. Scie à onglet radiale selon les revendications précédentes, **caractérisée en ce que** ladite base (2) est munie de façon bilatérale de moyens de support (44) pour des surfaces modulaires, pour étendre la surface de support de pièces.

14. Scie à onglet radiale selon la revendication 13, **caractérisée en ce que** lesdits moyens de support (44) sont constitués par des paires de tiges respectives (45) qui sont fixées de façon horizontale et de telle sorte qu'elles puissent être extraites de ladite base (2) et qu'elles puissent stockées de façon rétractée en dessous de celle-ci dans la configuration inactive.

15. Scie à onglet radiale selon les revendications précédentes, **caractérisée en ce que** ladite tête (6) est munie, dans une région supérieure, d'une deuxième surface de support de pièces (46) qui est croisée par une fente (46a) formée sur le plan vertical de disposition de ladite lame (7) pour le passage d'une partie supérieure de ladite lame (7).

16. Scie à onglet radiale selon les revendications précédentes, **caractérisée en ce que**, lors de ce que l'on appelle la coupe bout à bout de profilés, ladite tête (6) déplace la lame (7) de façon à mordre dans les profilés à partir de l'arrière, ou, autrement dit, grâce à un déplacement de translation sur ledit bras (9) depuis l'extérieur vers ladite butée de référence (4).

17. Scie à onglet selon la revendication 1, **caractérisée en ce que** ladite butée de référence (4) est supportée sur la base (3) par des montants verticaux correspondants qui passent dans des fentes en forme d'arc circulaire correspondantes (3a) qui sont formées de façon bilatérale dans ladite plate-forme (3).
